(19) Europäisches Patentamt / European Patent Office / Office européen des brevets

(11) **EP 1 678 635 B1**

(12) **EUROPEAN PATENT SPECIFICATION**

(45) Date of publication and mention
of the grant of the patent:
**23.10.2013 Bulletin 2013/43**

(21) Application number: **04780678.1**

(22) Date of filing: **11.08.2004**

(51) Int Cl.:
***G06F 17/30*** (2006.01)

(86) International application number:
**PCT/US2004/025882**

(87) International publication number:
**WO 2005/022413 (10.03.2005 Gazette 2005/10)**

(54) **METHOD AND APPARATUS FOR AUTOMATIC FILE CLUSTERING INTO A DATA-DRIVEN, USER-SPECIFIC TAXONOMY**

VERFAHREN UND VORRICHTUNG ZUM AUTOMATISCHEN DATEICLUSTERN IN EINE DATENGESTEUERTE BENUTZERSPEZIFISCHE TAXONOMIE

PROCEDE ET APPAREIL DE REGROUPEMENT DE FICHIER AUTOMATIQUE DANS UNE TAXONOMIE SPECIFIQUE A L'UTILISATEUR, GUIDE PAR LES DONNEES

(84) Designated Contracting States:
**AT BE BG CH CY CZ DE DK EE ES FI FR GB GR HU IE IT LI LU MC NL PL PT RO SE SI SK TR**

(30) Priority: **21.08.2003 US 644815**

(43) Date of publication of application:
**12.07.2006 Bulletin 2006/28**

(73) Proprietor: **APPLE INC.**
**Cupertino, CA 95014 (US)**

(72) Inventors:
• **BELLEGARDA, Jerome**
**Cupertino, CA 95014 (US)**

• **LOOFBOURROW, Wayne**
**Cupertino, CA 95014 (US)**

(74) Representative: **Barton, Russell Glen**
**Withers & Rogers LLP**
**4 More London Riverside**
**London**
**SE1 2AU (GB)**

(56) References cited:
| | |
|---|---|
| EP-A- 0 950 965 | EP-A- 1 170 674 |
| US-A- 5 819 258 | US-B1- 6 360 227 |
| US-B1- 6 446 061 | |

**Description**

FIELD OF THE INVENTION

The present invention relates to the field of graphical user interfaces, and more specifically, to a method of displaying user-generated documents within a file system.

BACKGROUND OF THE INVENTION

The various files and folders present on a computer system are organized in a complex hierarchy of directories, referred to as the file system. Some of the files and folders within the file system are necessary for the operating system, and the applications it supports, to work properly. These files and folders are logically positioned in the file system, and their organization is well documented for technical support purposes. The remainder of the files are typically created or downloaded by the user in the course of using the computer, and the way they are organized is entirely left up to individual preferences.

Most users start out with a reasonably principled directory structure, but as time goes by and the complexity of their file hierarchy grows, it typically becomes more and more difficult for them to navigate this ever-expanding portion of the file system. Advanced user interface elements, such as the "column view" in the MacOS X operating system distributed by Apple Computer Inc., are available for them to visualize what the file hierarchy looks like at any given point. In addition, sophisticated search capabilities can help them find the information they want to access, e.g. by file name/characteristics, document content, etc.

Nevertheless, a far better navigation experience could be achieved if there existed a method for visualizing/ displaying documents based on their content, i.e., in a semantic hierarchy. This semantic view option would complement current directory structures, and likely help users keep their file hierarchies in a readily usable state.

To make a semantic view possible, it is necessary to classify each user-generated file against a suitable taxonomy, so that files sharing the same taxonomy node can be grouped together accordingly. There are a number of possible approaches to this information management problem.

A first information management approach is to classify information against an existing all-purpose taxonomy using standard similarity measures. This approach is not  particularly adequate, however, because to be useful, the taxonomy needs to be user-specific. For example, consider the concept of "metal." While it connotes a hard material to some users, it represents a type of music for other users. As another example, the term "jaguar" is likely to have a very different meaning to car enthusiasts, to animal lovers, and to personal computer afficionados ("Jaguar" being the code name for the MacOS X v 10.2 operating system).

A second of the three approaches is to modify the all-purpose taxonomy to more closely reflect the situation at hand, by applying hand-crafted mapping rules. This approach has limitations as well. Setting aside the problem of hand-crafting the mapping rules (a non-trivial endeavor, in itself), typically the method is only able to perform slight modifications on the node labels, not the basic structure of the taxonomy. This may work for some users some of the time, but because it fails to take into account individual preferences, this approach is likely to dilute the perceived value of the result. In the example above, "jaguar" might be very close to the top of the preferred taxonomy for a MacOS X enthusiast, but very deep into it for another person. The ability to re-structure the existing taxonomy to increase the visibility of "jaguar" would probably be critical to the MacOS X enthusiast.

Finally, the third approach is to first build a user- specific taxonomy by manually defining a set of suitable user-related topics. Classification proceeds by isolating a relatively small, for example 50 to 100, number of documents that are deemed paradigms of each topic, and training a statistical classification system on that data. The statistical classification system is then used to classify the remaining files. This method is clearly not suited to the particular problem at hand, as users are generally not the kind of information specialist capable of laboriously assembling the necessary training sets. Furthermore, as the number of categories increases, this task becomes exponentially more onerous.

The application EP 1 170 674 A (LION BIOSCIENCE AG) 9 January 2002 is a relevant prior art disclosing a method for arranging data items in hierarchical clusters following a function of the density of distance values among items.

SUMMARY OF THE INVENTION

Accordingly, it is desirable to be able to automatically generate a special purpose taxonomy, revolving around concepts that are not only semantically meaningful but important to the user. Since the only evidence available to construct such a taxonomy is in the set of files to be classified, a satisfactory solution should provide simultaneous training/ classification of the files into the user- specific taxonomy.

The invention overcomes the above-identified problems associated with known classification systems by providing a method and apparatus for hierarchically clustering files and suitably labeling the resulting clusters. In one embodiment of the invention, this is achieved by exploiting a latent semantic analysis (LSA) paradigm, which has proven effective in query-based information retrieval, word clustering, document/topic clustering, large vocabulary language modeling, and semantic inference for voice command and control. More information on latent semantic analysis can be found in the article, "Exploiting Latent Semantic Information in Statistical Language Modeling", by J. R. Bellegarda, Proc. IEEE, Vol. 88, No. 8, pp. 1279-1296, August 2000.

In accordance with the invention, the above-mentioned objectives are achieved by incorporation of a semantic view option within the graphical user interface. When invoked, this view employs a clustering and labeling algorithm that results in the creation of semantic hierarchy of all user-generated documents based on document content. Thus, the user is able to navigate among documents based on their content, rather than some other organizational structure.

Further features of the invention, and the advantages offered thereby, are explained in greater detail hereinafter with reference to specific embodiments illustrated in the accompanying drawings, wherein like elements are designated by like identifiers.

BRIEF DESCRIPTION OF THE DRAWING FIGURES

The objects and advantages of the invention will be understood by reading the detailed description in conjunction with the drawings, in which:

FIG. 1 shows a block diagram of an exemplary computer system in which the invention can be employed;
FIGS. 2A and 2B show an exemplary conventional file hierarchy and a semantic hierarchy in accordance with the invention, respectively;
FIG. 3 is a flow chart illustrating the creation of a semantic hierarchy in accordance with an exemplary embodiment of the invention;
FIG. 4 illustrates a matrix that is constructed from a set of text documents; and
FIG. 5 depicts the singular valued decomposition of the matrix.

DETAILED DESCRIPTION OF THE INVENTION

To facilitate an understanding of the principles and features of the invention, it is explained hereinafter with reference to its implementation in an illustrative embodiment. In particular, an example is provided in which text documents are analyzed and clustered on the basis of their word content. It will be appreciated, however, that the present invention can find utility in a variety of applications to various types of data files, as will become apparent from an understanding of the principles that underscore the invention.

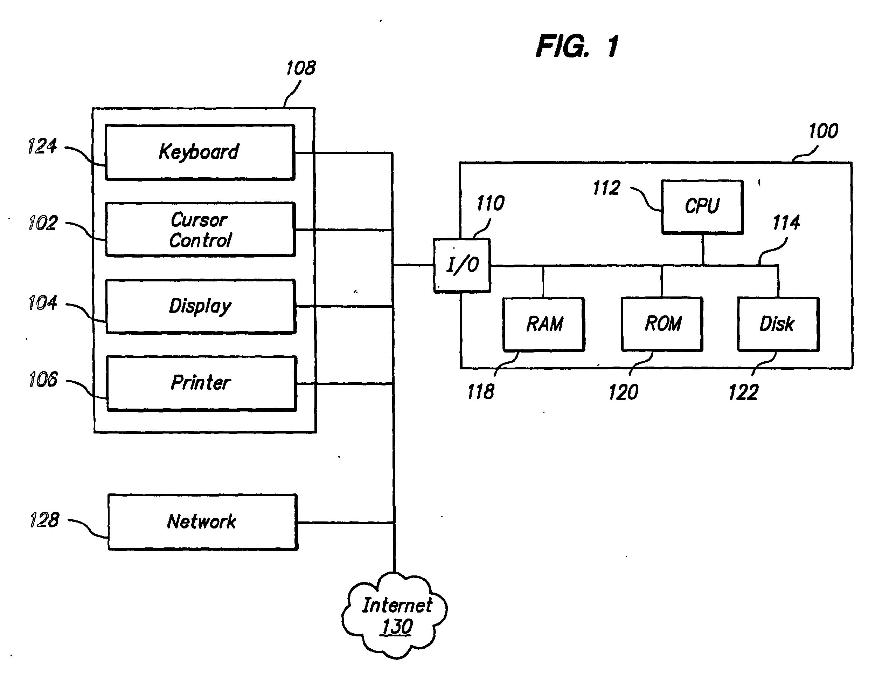

An exemplary computer system of the type in which the present invention can be employed is illustrated in block diagram form in Figure 1. The structure of the computer itself can be of a conventional type. It is briefly described here for subsequent understanding of the manner in which the features of the invention cooperate with the structure of the computer.

Referring to Figure 1, the system includes a computer 100 having a variety of external peripheral devices 108 connected thereto. The computer 100 includes a central processing unit 112, a main memory which is typically implemented in the form of a random access memory 118, a static memory that can comprise a read only memory 120, and a permanent storage device, such as a magnetic or optical disk 122. The CPU 112 communicates with each of these forms of memory through an internal bus 114. Additionally, other types of memory devices may be connected to the CPU 112 via the internal bus 114. The peripheral devices 108 include a data entry device such as a keyboard 124, and a pointing or cursor control device 102 such as a mouse, trackball or the like. A display device 104, such as a CRT monitor or an LCD screen, provides a visual display of the information that is being processed within the computer, for example the contents of a document or a hierarchical view of multiple documents and folders. A hard copy of this information can be provided through a printer 106, or similar device. Each of these external peripheral devices communicates with the CPU 112 by means of one or more input/output ports 110 on the computer. Input/output ports 110 also allow computer 100 to interact with a local area network (LAN) server or an external network 128, such as a VLAN, WAN, or the Internet 130.

Computer 100 typically includes an operating system (OS), which controls the allocation and usage of the hardware resources such as memory, central processing unit time, disk space, and peripheral devices. The operating system includes a user interface that is  presented on the display device 104 to enable the user to interact with the functionality of the computer. If the user interface is a graphical user interface (GUI), the operating system controls the ability to generate windows and other graphics on the computer's display device 104. For example, the operating system may provide a number of windows to be displayed on the display device 104 associated with each of the programs running in the computer's RAM 118. Depending upon the operating system, these windows may be displayed in a variety of manners, in accordance with themes associated with the operating system and particular desired display effects associated with the operating system.

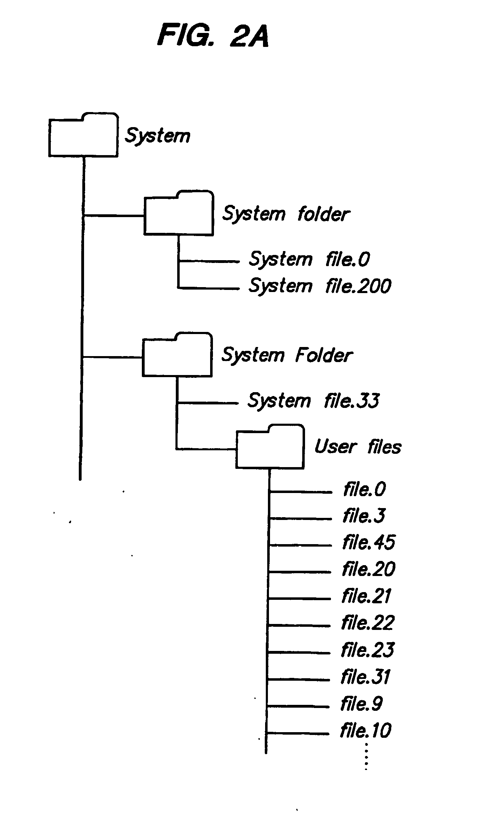

Another component of the operating system is the file system, which controls access to and organizes the files stored in the computer system, such as the local storage disk 122 and/or remote storage media. The user interface provides a capability for a user to view the contents of the file system. For example, a graphical user interface may provide a hierarchical display of files and folders, or directories, as shown in Fig. 2A. The GUI can also provide other view options, such as by list or icon. These types of views typically correspond to a structural organization designed by the user. As discussed above, these known methods of viewing/navigating file system documents can become cumbersome to the user as the number of files increases.

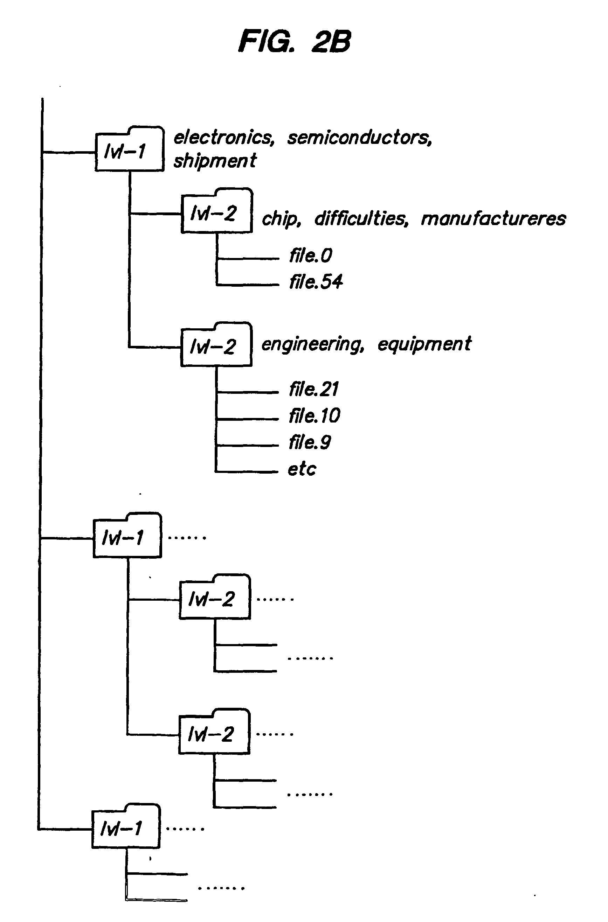

Accordingly, the invention provides a semantic view option which allows a user to view documents by, for example, the content of the file. This allows the user a choice of, for example, icons, list, file system columns, or semantic hierarchy. As shown in the hierarchical display of Fig. 2B, the user files are displayed in an hierarchical format based on the content of the documents. This is achieved, according to one embodiment of the invention, by employing a clustering and labeling algorithm that classifies text files based on the word content of the files. In the context of the present invention, the term "text file" is not limited to "pure" text files, e.g. those generated with a text editor program. Rather, it includes any type of file containing textual content that can be retrieved through a suitable text extraction or file translation process, such as files in PDF format, word processor files, and even image files containing text that can be discerned through optical character recognition or the like.

In addition to clustering and labeling text files based on semantic similarities within their content, the invention can cluster or organize non-text files in accordance with more traditional methods of clustering based on metadata. For example, graphic files can be organized under a label of "pictures" or they can be further organized based on information provided by the user during creation of the file, using rule-based clustering.

Clustering of the files can be initiated upon selection of a "semantic view" option within the GUI, and/or run periodically in the background. Once the initial analysis of the documents is performed to derive a taxonomy, re-evaluation of the collection is not necessary every time the user adds a document. As a result newly added documents can be classified against the existing taxonomy, and only if the "fit" is outside acceptable parameters is further evaluation and re-classification of the corpus of documents required. However, if preferable, the evaluation and clustering process can be performed upon creation of a new file, or periodically in the background, for example, when the CPU 112 is not in high use.

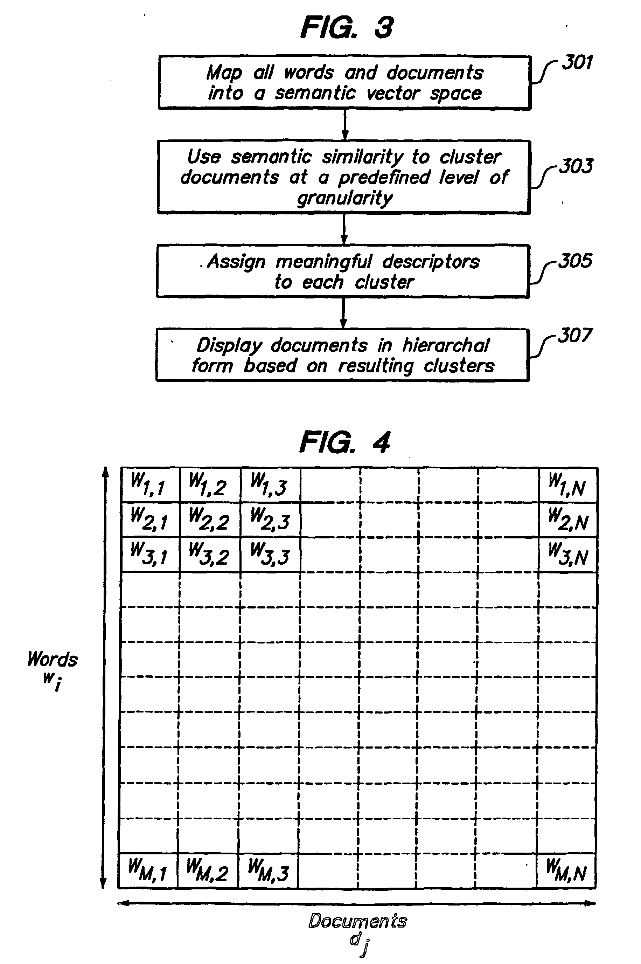

The clustering and labeling algorithm for text files comprises three principal stages: (i) mapping all words and documents into an appropriate semantic vector space; (ii) using semantic similarity to cluster the documents at predetermined levels of granularity; and (iii) assigning a meaningful descriptor to each resulting cluster in the space. These three stages are represented in Figure 3 as steps 301, 303 and 305, respectively. Once the documents have been clustered and labeled according to this process, they are displayed to the user, at step 307, in a manner that is based on the resulting clusters, as represented in Figure 2B.

Various techniques can be employed to accomplish these tasks. For textual documents, a language model is employed to identify the underlying semantics of the files. In a preferred embodiment of the invention, the statistical model provided by the LSA paradigm is used to implement all three of these stages. In general, scattered instances of word-document correlation are mapped into a parsimonious semantic space during the first stage by means of a dimensionality reduction technique provided by LSA. The second stage utilizes LSA document-to-document comparison capabilities to evaluate all potential clusters. LSA word-document comparison capabilities are used in the final stage to determine the words that are most appropriate for each cluster.

A detailed description of the implementation of these three stages, using the latent semantic analysis paradigm, follows. Let T be the collection of all N user-generated files present at a given time on the user's computer. This collection is flat, in the sense that it does not retain information about the particular directory structure used to organize the files. Also, let $v$, $|v| = M$, be the list of words and other symbols that occur in T, i.e., the underlying vocabulary.

First an (M x N) matrix W, whose entries $w_{ij}$ suitably reflect the extent to which each word $w_i \in v$ appearing in document $d_j \in T$ is constructed. A reasonable expression of $w_{ij}$ is:

$$w_{ij} = (1 - \varepsilon_i) \frac{c_{ij}}{n_j} \qquad (1)$$

where $c_{i,j}$ is the number of times $w_i$ occurs in $d_j$, $n_j$ is the total number of words present in $d_j$, and $\varepsilon_i$ is the normalized entropy of $w_i$ in the corpus T. The global weighting implied by the expression $1 - \varepsilon_i$ reflects the fact that two words appearing with the same count in a particular document do not necessarily convey the same amount of information; this is subordinated to the distribution of the words in the entire collection T.

The matrix W resulting from this feature extraction is depicted in Figure 4, and defines two vector representations for the words and the documents. Each word $w_i$ is uniquely associated with a row vector of dimension N, and each document $d_j$ is uniquely associated a column vector of dimension M. In a practical implementation with an appreciable number of documents, the vectors $w_i$ and $d_j$ will typically be quite sparse, i.e. a large number of the cell values $w_{ij}$ will be zero. In addition, the dimensions M and N can get to be quite large, and the dimension spaces are distinct from one another. As explained in greater detail in the above-cited publication, these issues can be addressed by performing a matrix decomposition on the matrix W.

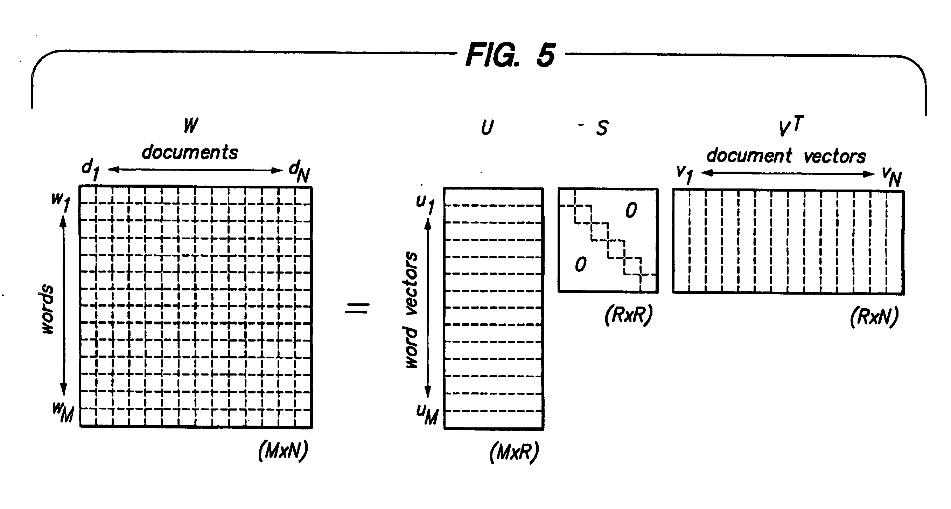

In one embodiment of the invention, a singular value decomposition is carried out. An R- dimensional singular value decomposition (SVD) of W is depicted in Figure 5, and represented as:

$$W = USV^T, \qquad (2)$$

where U is the (M x R) left singular matrix with row vectors $u_i$ ($1 \leq i \leq M$), S is the (R x R) diagonal matrix of singular values $s_1 \geq s_2 \geq ... \geq s_R > 0$, V is the (N x R) right singular matrix with row vectors $v_j$ ($1 \leq j \leq N$), R « M, N is the order of the decomposition, and $^T$ denotes matrix transposition. This rank- R decomposition defines a mapping between: (i) each word and the R- dimensional vector $\bar{u}_i = u_i S$, after appropriate scaling by the singular values, and (ii) each document and the R- dimensional vector $\bar{v}_j = v_j S$, after the same scaling. The continuous vector space spanned by all of the instances of $\bar{u}_i$ and $\bar{v}_j$, is referred to as the LSA space, $S$.

To understand the semantic nature of the mapping, it can be observed that the relative position of the R-dimensional vectors is determined by the overall pattern of the language used in T, as opposed to specific keywords or constructs. Hence a word whose meaning is related to $w_i$ will tend to map to a vector "close" (in some suitable metric) to $\bar{u}_i$, while a document germane to the topic discussed in $d_j$ will tend to map to a vector "close" to $\bar{v}_j$. These characteristics form the basis for clustering and labeling.

Since the space S is continuous, it is only necessary to identify an appropriate closeness measure to enable document clustering. For the LSA paradigm, a natural metric to consider is the cosine of the angle between two document vectors. Thus a suitable measure for document-to-document comparison is given in equation (3) for $1 \leq j,k \leq N$:

$$K(\bar{v}_j, \bar{v}_k) = \cos(v_j S, v_k S) = \frac{v_j S^2 v_k^T}{\|v_j S\| \|v_k S\|} \qquad (3)$$

Clustering occurs by evaluating which two documents are closest to each other, and merging their semantic information together.

The number of clusters at any given level of granularity can be controlled by monitoring the increase in cluster variance resulting from a merge operation. Since the underlying singular vectors are orthogonal, covariance matrices are diagonal. Thus, it is sufficient to consider what happens along any one dimension. Along that dimension, let $\mu_1$, $\sigma_1^2$ and $\mu_2$, $\sigma_2^2$ be the means and variances of two candidates for merging. If $n_1$ and $n_2$ are the sizes of the two clusters, the mean variance of the merged entity along that dimension is:

$$\sigma^2 = \frac{n_1 \sigma_1^2 + n_2 \sigma_2^2}{n_1 + n_2} + \frac{n_1}{n_1 + n_2} \cdot \frac{n_2}{n_1 + n_2} \cdot (\mu_1 - \mu_2)^2 \qquad (4)$$

Thus, the merge operation is guaranteed to increase the cluster variance over and beyond the average variance of the two candidates, by a quantity seen to be proportional to $(\mu_1 - \mu_2)^2$. This quantity can easily be tracked, and suitable thresholds established to implement any desired level of granularity. Thus, a first threshold can be defined to establish the lowest level of clusters into which the documents will be grouped, and additional thresholds can define higher level clusters, or "super clusters", in which plural lower-level clusters are grouped. These higher level clusters might also include outlier documents that do not fall within the thresholds to be included in lower-level clusters.

Once the clusters are derived, they are labeled in a meaningful way for presentation to the user. To do that, the word(s) most representative of the cluster content are determined, which is accomplished by means of a word-document comparison in the LSA space S. In the LSA paradigm, a natural metric to consider is the cosine of the angle between the associated word and document vectors, taking the appropriate scaling into account. Thus a suitable close-ness measure for $1 \leq i \leq M$, $1 \leq k \leq N$, is

$$\overline{K}(\overline{u}_i,\overline{v}_k) = \cos(u_i S^{1/2}, v_k S^{1/2}) = \frac{u_i S v_k^T}{\|u_i S^{1/2}\| \|v_k S^{1/2}\|} \qquad (5)$$

All words present in the cluster need not be evaluated, since function words, for example, would not be meaningful. On the other hand, there may be words from the underlying vocabulary which do not occur in the cluster, but may still be relevant. It therefore may be advantageous to filter beforehand the pertinent subset of the vocabulary (e.g., nouns, verbs, and adjectives) deemed the most promising to evaluate.

Applying the metric (5) results in a list of candidate labels for each cluster, ranked in decreasing order of relevance. Those that are within a pre-determined threshold, and optionally satisfy any other suitable criteria (such as further part-of-speech constraints, for example), can be retained. These words constitute the label descriptor returned to the user to characterize the cluster. Repeating this procedure for each cluster at every level of granularity completes the taxonomy sought.

Example

Preliminary experiments were conducted using a database of 324 files varying in length from 14 to 3328 words, with an average length of 471 words. This sample set is reasonably representative of the range of text document sizes likely to be produced by an average user. The general domain was financial news, which is narrower than the typical user's. Accordingly, this database translates into fairly severe test conditions.

The approach described above was used to derive a hierarchical structure with 3 levels of granularity. The bottom level (level-3) comprised the 324 documents themselves, the middle level (level-2) a total of 20 clusters, and the top level (level-1) 5 superclusters. No word agglomeration was performed, so label descriptors comprised individual words only. The top 3 or 4 words were retained for the purpose of illustration. In a preferred embodiment, word agglomeration would better capture multi-word expressions like "interest rate."

Table I offers a partial display of the resulting semantic view for this test set, showing all 5 level-I superclusters but only 8 of the 20 level-2 clusters. When compared to a subjective manual organization, the misclassification error rate at the 20 cluster level was measured to be 6.3 percent. This compares favorably with the typical misclassification rate available in the prior art (from 10 % to 15 % assuming an existing all-purpose taxonomy with suitably modified labels). In addition, the approach described above has the advantage to build, in a completely autonomous fashion, a taxonomy individually customized to each user.

Table 1

| Level - 1 | Level - 2 | Level - 3 |
|---|---|---|
| electronics | chip | file.0 |
| glut | difficulties | file.15 |
| semiconductor | manufacturers | file.37 |
| shipments | engineering | etc... |
|  | equipment | file.1 |
|  | valero | file.27 |
|  |  | file.30 |
|  |  | etc... |
| concern | debenture | file.4 |
| credit | grant | file.8 |
| investment | receipts | file.25 |
| revenues |  | etc... |
|  | group | file.5 |
|  | management | file.6 |
|  | panic | file.12 |

(continued)

| Level - 1 | Level - 2 | Level - 3 |
|---|---|---|
| | | etc... |
| accountability | act | file.7 |
| bilateral | presidential | file.35 |
| economy | subcommittee | file.36 |
| testified | | etc... |
| | allied | file.11 |
| | command | file.23 |
| | formation | file.51 |
| | | etc... |
| aids | interferon | file.10 |
| doctors | patients | file.18 |
| laboratories | patent | file.19 |
| portfolio | | etc... |
| | | |
| airwaves | broadcasting | file.2 |
| entertainment | cable | file.21 |
| hollywood | communications | file.21 |
| television | | etc... |

In accordance with the present invention, once the clustering of documents into a suitable number of levels, and the labeling of the clusters, has been performed, the documents are displayed to the user in a view that corresponds to the derived taxonomy. An example of such a view, based upon the foregoing example, is depicted in Figure 2B. In a manner analogous to the conventional file system view of Figure 2A, the documents are represented in a hierarchical arrangement of folders and files, where the folders correspond to the respective clusters. In this case, however, the organization of the folders and files is based upon the  content of the documents, rather than the file system structure. As a result, when a new document is added to the collection, it can be automatically classified and displayed in the appropriate folder, without user intervention. Furthermore, the view presented to the user is dynamically adaptive to changes in the overall content of the collection as documents are added and subtracted from it.

The semantic view of the present invention is preferably incorporated into the graphical user interface as one of a number of selectable options from which the user can choose. Thus, a default view might be the hierarchical tree view of Figure 2A, in which the files are organized in accordance with their path names, i.e. the actual file system structure. To facilitate access to a particular file whose location may not be intuitive, the user can switch to the semantic view of Figure 2B, and thereby select it on the basis of its content, rather than its location. As a further option, the semantic hierarchy might be presented in a column view, rather than a tree view. If desired, the user can also be presented with the option of switching the actual file system structure based upon the virtual file system arrangement presented in the semantic view.

The foregoing embodiment of the invention has been described with reference to its implementation using the LSA paradigm to perform all three of the major stages of mapping the corpus of files into a semantic vector space, clustering the files within the space, and assigning labels to the clusters. While this particular paradigm is preferred for textual documents because it accomplishes the results in a statistically sound manner, it does not represent the sole approach for achieving the principles of the invention. Rather, any language model which has the ability to capture the underlying semantics of the files can be employed to present the user with a content-based view of the file system. In a simplistic approach, for instance, a thesaurus-based synonym expansion might be used to perform some of the stages. As another possibility, a form of n-gram analysis, incorporating some suitable span extension, might be used.

For example, while the invention has been described in the context of clustering text files based on the word content of the files, the invention is equally applicable to the semantic views based on other methods of clustering. For instance with respect to non-textual data files, the clustering can be based upon file metadata and the like.

Furthermore, provision can be made for the user to override a particular clustering or labeling outcome, with feedback propagated to the semantic space as appropriate. For instance, if the user moves a document from one cluster to another, the relative weighting of words could be adjusted to conform with the new alignment. Similar results can take place if the user changes the label for a cluster.

The presently disclosed embodiments are, therefore, considered in all respects to be illustrative and not restrictive. The scope of the invention is indicated by the appended claims, rather than the foregoing description. .

**Claims**

1.  A method of displaying files within a file system to a user in a semantic hierarchy, the method comprising the steps of:

    mapping the files in the file system into a semantic vector space;
    clustering the files into clusters within said space based on their semantic similarity, comprising:

    identifying clusters as candidates for merging; for any two cluster candidates, calculating the increase in the cluster variance of a larger cluster that would result if the two smaller cluster candidates were merged over and beyond the average variance of the two smaller cluster candidates, wherein the cluster variance is the variance along a dimension of the vectors of the files within a cluster;
    providing multiple threshold values which represent predetermined levels of granularity;
    merging candidates for which the calculated increase is less than a first threshold to establish the lowest level of clusters and establishing further levels by merging clusters from lower levels based on a comparison of calculated increases in the cluster variance and respective threshold values of the multiple threshold values to form plural levels of clusters.

2.  The method according to claim 1, wherein the step of clustering the files is performed as a background routine during the operation of a computer associated with said file system.

3.  The method according to claim 2, wherein the step of clustering the files is performed in response to the creation of a new file within the file system.

4.  The method according to claim 1, wherein said files are text documents and said mapping is conducted on the basis of a language model.

5.  The method according to claim 4, wherein said mapping step comprises the steps of constructing a matrix which associates each word in the documents with a vector and associates each document with a vector.

6.  The method of claim 5, further including the step of decomposing said matrix to define the words and documents as vectors in a continuous vector space.

7.  The method of claim 5, wherein said clustering is performed by identifying similar documents based on the cosine of the angle between the document vectors.

8.  The method of claim 5 further including the step of automatically labeling the clusters.

9.  The method of claim 9 wherein said labeling comprises selecting representative words based on the closeness of their vectors to the document  vectors in a cluster.

10. A graphical user interface configured to display files belonging to a file system in a virtual file system with a semantic hierarchy of plural levels of clusters that is derived from semantic similarities of said files according to the method of any of claims 1- 9.

11. The graphical user interface according to claim 11, wherein clustering of the files is initiated by user selection.

12. The graphical user interface according to claim 11, wherein clustering of the files is initiated upon creation of a new file in the file system.

13. The graphical user interface according to claim 11, wherein text files are clustered utilizing a language model and non-text files are clustered utilizing rule-based techniques.

14. The graphical user interface according to claim 14, wherein said language model comprises the LSA (latent semantic analysis) paradigm.

15. Computer readable media having stored therein computer executable code for
analyzing files in a file system to determine similarities in data pertaining to their content,
clustering the files into clusters within said space based on their semantic similarity, comprising:

  identifying clusters as candidates for merging;
  for any two candidates, calculating the increase in the cluster variance of a larger cluster that would result if the two smaller cluster candidates were merged over and beyond the average variance of the two smaller cluster candidates, wherein the cluster variance is the variance along a dimension of the vectors of the files within a cluster;
  providing multiple threshold values which represent predetermined levels of granularity;
  merging candidates for which the calculated increase is less than a first threshold to establish the lowest level of clusters and establishing further levels by merging clusters from lower levels based on a comparison of calculated increases in the cluster variance and respective threshold values of the multiple threshold values to form plural levels of clusters.

16. The computer-readable media of claim 15 wherein said files are text documents, and the similarities are based upon the word content of the files.

17. The computer-readable media of claim 16 wherein said similarities are determined in accordance with a language model, and the files are clustered in accordance with said model.

18. The computer-readable media of claim 17, wherein said language model comprises the LSA (latent semantic analysis) paradigm.

19. The computer-readable media of claim 17, wherein said computer-executable code performs the steps of constructing a matrix which associates each word in the documents with a vector and associates each document with vector.

20. The computer-readable media of claim 19, wherein said computer-executable code further performs step of decomposing said matrix to define the words and documents as vectors in a continuous vector space.

21. The computer-readable media of claim 20, wherein said computer-executable code performs clustering by identifying documents based on the cosine of the angle between the document vectors.

22. The computer-readable media of claim 19, wherein said computer-executable code performs step of automatically labeling the clusters.

23. The computer-readable media of claim 22, wherein said labeling comprises selecting representative words based on the closeness of their vectors to the document vectors in a cluster.

24. The computer readable media according to claim 23, wherein the computer executable code performs the following steps:

  clustering text files within the file system using semantic similarities;
  clustering non-text files within the files system using rule-based techniques;
  labeling the resulting clusters;
  deriving the files in a hierarchical format based on the resulting clusters and labels; and
  providing the user an option of displaying the files in the hierarchical format based on the resulting clusters and labels.

25. A computer system, comprising:

  a file system storing files;
  a display device;

a processor for:

mapping the files in the file system into a semantic vector space;
clustering the files into clusters within said space based on their semantic similarity, comprising:

identifying clusters as candidates for merging;
for any two candidates, calculating the increase in the cluster variance of a larger cluster that would result if the two smaller cluster candidates were merged over and beyond the average variance of the two smaller cluster candidates, wherein the cluster variance is the variance along a dimension of the vectors of the files within a cluster;
providing multiple threshold values which represent predetermined levels of granularity;
merging candidates for which the calculated increase is less than a first threshold to establish the lowest level of clusters and establishing further levels by merging clusters from lower levels based on a comparison of calculated increases in the cluster variance and respective threshold values of the multiple threshold values to form plural levels of clusters.

26. The computer system of claim 25 wherein said files are text documents and said processor maps said files on the basis of a language model.

27. The computer system of claim 26 wherein said processor constructs a matrix which associates each word in the documents with a vector and associates each document with a vector.

28. The computer system of claim 27 wherein said processor further decomposes said matrix to define the words and documents as vectors in a continuous vector space.

29. The computer system of claim 27, wherein said processor clusters the files by identifying documents based on the cosine of the angle between the document vectors.

## Patentansprüche

1. Ein Verfahren zum Anzeigen von Dateien innerhalb eines Dateisystems für einen Benutzer in einer semantischen Hierarchie, wobei das Verfahren die folgenden Schritte aufweist:

Abbilden der Dateien in dem Dateisystem in einen semantischen Vektorraum;
Gruppieren der Dateien in Cluster innerhalb des Raumes basierend auf ihrer semantischen Ähnlichkeit, umfassend:

Identifizieren von Clustern als Kandidaten für ein Verbinden;
für beliebige zwei Clusterkandidaten, Berechnen des Anstiegs der Clustervarianz eines größeren Clusters, der sich ergeben würde, wenn die zwei kleineren Clusterkandidaten verbunden werden würden, über und jenseits der Durchschnittsvarianz der beiden kleineren Clusterkandidaten, wobei die Clustervarianz die Varianz entlang einer Dimension der Vektoren der Dateien innerhalb eines Clusters ist;
Bereitstellen mehrerer Schwellwerte, welche vorbestimmte Detailgenauigkeitsebenen darstellen;
Verbinden der Kandidaten, für welche der berechnete Anstieg weniger ist als ein erster Schwellwert um die niedrigste Ebene von Clustern zu begründen und Begründen weiterer Ebenen durch Verbinden von Clustern aus niedrigeren Ebenen, basierend auf einem Vergleich der berechneten Anstiege der Clustervarianz und jeweiligen Schwellwerten der mehreren Schwellwerte, um Mehrfachebenen von Clustern zu bilden.

2. Das Verfahren nach Anspruch 1, wobei der Schritt des Gruppierens der Dateien ausgeführt wird als eine Hintergrundroutine während des Betriebs eines Computers, der mit dem Dateisystem verknüpft ist.

3. Das Verfahren nach Anspruch 2, wobei der Schritt des Gruppierens der Dateien ausgeführt wird als Antwort auf die Erzeugung einer neuen Datei innerhalb des Dateisystems.

4. Das Verfahren nach Anspruch 1, wobei die Dateien Textdokumente sind und das Abbilden ausgeführt wird auf der Grundlage eines Sprachmodells.

**5.** Das Verfahren nach Anspruch 4, wobei der Abbildungsschritt die Schritte des Aufbauens einer Matrix umfasst, welche jedes Wort in den Dokumenten mit einem Vektor verknüpft und jedes Dokument mit einem Vektor verknüpft.

**6.** Das Verfahren nach Anspruch 5, weiterhin den Schritt des Zerlegens der Matrix beinhaltend, um die Worte und Dokumente als Vektoren in einem kontinuierlichen Vektorraum zu definieren.

**7.** Das Verfahren nach Anspruch 5, wobei das Gruppieren ausgeführt wird durch Identifizieren ähnlicher Dokumente, basierend auf dem Kosinus des Winkels zwischen den Dokumentenvektoren.

**8.** Das Verfahren nach Anspruch 5, weiterhin einen Schritt des automatischen Bezeichnens der Cluster beinhaltend.

**9.** Das Verfahren nach Anspruch 9, wobei das Bezeichnen ein Auswählen repräsentativer Wörter auf der Grundlage der Nähe ihrer Vektoren zu den Dokumentenvektoren in einem Cluster umfasst.

**10.** Eine graphische Benutzerschnittstelle, die eingerichtet ist zum Anzeigen von Dateien, die zu einem Dateisystem in einem virtuellen Dateisystem mit einer semantischen Hierarchie von Mehrfachebenen von Clustern gehören, die abgeleitet ist von semantischen Ähnlichkeiten der Dateien gemäß dem Verfahren nach einem der Ansprüche 1 bis 9.

**11.** Die graphische Benutzerschnittstelle nach Anspruch 11, wobei das Gruppieren der Dateien durch eine Benutzerauswahl eingeleitet wird.

**12.** Die graphische Benutzerschnittstelle nach Anspruch 11, wobei das Gruppieren der Dateien nach dem Erzeugen einer neuen Datei in dem Dateisystem eingeleitet wird.

**13.** Die graphische Benutzerschnittstelle nach Anspruch 11, wobei Textdateien gruppiert werden unter Verwendung eines Sprachmodells und Nichttextdateien gruppiert werden unter Verwendung von regelbasierten Techniken.

**14.** Die graphische Benutzerschnittstelle nach Anspruch 14, wobei das Sprachmodell das LSA- (latente semantische Analyse) Paradigma umfasst.

**15.** Rechnerlesbare Medien, auf denen ein rechenausführbarer Code gespeichert ist zum:

Analysieren von Dateien in einem Dateisystem, um Ähnlichkeiten in den Daten bezüglich ihres Inhalts festzustellen,
Gruppieren der Dateien in Clustern innerhalb des Raumes, basierend auf ihrer semantischen Ähnlichkeit, umfassend:

Identifizieren von Clustern als Kandidaten für ein Verbinden;
für beliebige zwei Kandidaten, Berechnen des Anstiegs der Clustervarianz eines größeren Clusters, der sich ergeben würde, wenn zwei kleinere Clusterkandidaten verbunden werden würden, über und jenseits der Durchschnittsvarianz der zwei kleineren Clusterkandidaten, wobei die Clustervarianz die Varianz entlang einer Dimension der Vektoren der Dateien innerhalb eines Clusters ist;
Bereitstellen mehrerer Schwellwertebenen, welche vorbestimmte Detailgenauigkeitsebenen darstellen;
Verbinden der Kandidaten, für welche der berechnete Anstieg weniger ist als ein erster Schwellwert um die niedrigste Ebene von Clustern zu begründen und Begründen weiterer Ebenen durch Verbinden von Clustern aus niedrigeren Ebenen, basierend auf einem Vergleich der berechneten Anstiege der Clustervarianz und jeweiligen Schwellwerten der mehreren Schwellwerte, um Mehrfachebenen von Clustern zu bilden.

**16.** Rechnerlesbare Medien nach Anspruch 15, wobei die Dateien Textdokument sind und die Ähnlichkeiten auf dem Wortinhalt der Dateien basieren.

**17.** Rechnerlesbare Medien nach Anspruch 16, wobei die Ähnlichkeiten bestimmt werden in Übereinstimmung mit einem Sprachmodell und die Dateien gruppiert werden in Übereinstimmung mit dem Modell.

**18.** Rechnerlesbare Medien nach Anspruch 17, wobei das Sprachmodell das LSA- (latente semantische Analyse) Paradigma umfasst.

19. Rechnerlesbare Medien nach Anspruch 17, wobei der rechnerausführbare Code die Schritte eines Aufbauens einer Matrix umfasst, welche jedes Wort in den Dokumenten mit einem Vektor verknüpft und jedes Dokument mit einem Vektor verknüpft.

20. Rechnerlesbare Medien nach Anspruch 19, wobei der rechnerausführbare Code weiterhin den Schritt eines Zerlegens der Matrix ausführt, um die Wörter und die Dokumente als Vektoren in einem kontinuierlichen Vektorraum zu definieren.

21. Rechnerlesbare Medien nach Anspruch 20, wobei der rechnerausführbare Code ein Gruppieren ausführt durch Identifizieren von Dokumenten, basierend auf dem Kosinus des Winkels zwischen den Dokumentenvektoren.

22. Rechnerlesbare Medien nach Anspruch 19, wobei der rechnerausführbare Code den Schritt eines automatischen Bezeichnens der Cluster ausführt.

23. Rechnerlesbare Medien nach Anspruch 22, wobei das Bezeichnen ein Auswählen repräsentativer Wörter, basierend auf der Nähe ihrer Vektoren zu den Dokumentenvektoren in einer Cluster umfasst.

24. Rechnerlesbare Medien nach Anspruch 23, wobei der rechnerausführbare Code die folgenden Schritte ausführt:

Gruppieren von Textdateien innerhalb des Dateisystems unter Verwendung semantischer Ähnlichkeiten;
Gruppieren von Nichttextdateien innerhalb des Dateisystems unter Verwendung regelbasierter Techniken;
Bezeichnen der resultierenden Cluster;
Ableiten der Dateien in einem hierarchischen Format basierend auf den resultierenden Clustern und Bezeichnungen; und
Bereitstellen einer Option für den Benutzer eines Anzeigens der Dateien in dem hierarchischen Format, basierend auf den resultierenden Clustern und Bezeichnungen.

25. Ein Computersystem, umfassend:

ein Dateisystem, welches Dateien speichert;
eine Anzeigevorrichtung;
einen Prozessor zum:

Abbilden der Dateien in dem Dateisystem in einen semantischen Vektorraum;
Gruppieren der Dateien in Cluster innerhalb des Raumes, basierend auf ihrer semantischen Ähnlichkeit, umfassend:

Identifizieren von Clustern als Kandidaten für ein Verbinden;
für beliebige zwei Clusterkandidaten, Berechnen des Anstiegs der Clustervarianz eines größeren Clusters, der sich ergeben würde, wenn die zwei kleineren Clusterkandidaten verbunden werden würden, über und jenseits der Durchschnittsvarianz der beiden kleineren Clusterkandidaten, wobei die Clustervarianz die Varianz entlang einer Dimension der Vektoren der Dateien innerhalb eines Clusters ist;
Bereitstellen mehrerer Schwellwerte, welche vorbestimmte Detailgenauigkeitsebenen darstellen;
Verbinden der Kandidaten, für welche der berechnete Anstieg weniger ist als ein erster Schwellwert um die niedrigste Ebene von Clustern zu begründen und Begründen weiterer Ebenen durch Verbinden von Clustern aus niedrigeren Ebenen, basierend auf einem Vergleich der berechneten Anstiege der Clustervarianz und jeweiligen Schwellwerten der mehreren Schwellwerte, um Mehrfachebenen von Clustern zu bilden.

26. Das Computersystem nach Anspruch 25, wobei die Dateien Textdokumente sind und der Prozessor die Dateien abbildet auf der Basis eines Sprachmodells.

27. Das Computersystem nach Anspruch 26, wobei der Prozessor eine Matrix aufbaut, welche jedes Wort in den Dokumenten mit einem Vektor verknüpft und jedes Dokument mit einem Vektor verknüpft.

28. Das Computersystem nach Anspruch 27, wobei der Prozessor weiterhin die Matrix zerlegt, um die Worte und Dokumente als Vektoren in einem kontinuierlichen Vektorraum zu definieren.

**29.** Das Computersystem nach Anspruch 27, wobei der Prozessor die Dateien gruppiert durch Identifizieren von Dokumenten, basierend auf dem Kosinus des Winkels zwischen den Dokumentenvektoren.

**Revendications**

**1.** Un procédé d'affichage de fichiers au sein d'un système de fichiers à destination d'un utilisateur avec une hiérarchie sémantique, le procédé comprenant les étapes suivantes :

le mappage des fichiers du système de fichiers vers un espace vectoriel sémantique ;
l'agrégation des fichiers en agrégats dans ledit espace en fonction de leur similarité sémantique, comprenant :

l'identification d'agrégats comme candidats pour une fusion ;
pour deux agrégats candidats quelconques, le calcul de l'augmentation de la variance d'agrégat d'un agrégat plus grand qui serait obtenue si les deux agrégats candidats plus petits étaient fusionnés au-dessus et au-delà de la variance moyenne des deux agrégats candidats plus petits, la variance d'agrégat étant la variance suivant une dimension des vecteurs des fichiers au sein d'un agrégat ;
l'obtention de valeurs de seuil multiples qui représentent des niveaux de granularité prédéterminés ;
la fusion des candidats pour lesquels l'augmentation calculée est inférieure à un premier seuil pour établir le plus bas niveau d'agrégat et l'établissement d'autres niveaux par fusion d'agrégats provenant de niveaux inférieurs en fonction d'une comparaison des augmentations calculées de la variance d'agrégat et des valeurs de seuil respectives des valeurs de seuil multiples pour former plusieurs niveaux d'agrégats.

**2.** Le procédé de la revendication 1, dans lequel l'étape d'agrégation des fichiers est effectuée sous forme d'une routine d'arrière-plan en cours de fonctionnement d'un ordinateur associé audit système de fichiers.

**3.** Le procédé de la revendication 2, dans lequel l'étape d'agrégation des fichiers est exécutée en réponse à la création d'un nouveau fichier au sein du système de fichiers.

**4.** Le procédé de la revendication 1, dans lequel lesdits fichiers sont des documents de texte et ledit mappage est effectué sur la base d'un modèle linguistique.

**5.** Le procédé de la revendication 4, dans lequel ladite étape de mappage comprend les étapes de construction d'une matrice qui associe chaque mot des documents à un vecteur et associe chaque document à un vecteur.

**6.** Le procédé de la revendication 5, comprenant en outre l'étape de décomposition de ladite matrice pour définir les mots et les documents en tant que vecteurs dans un espace vectoriel continu.

**7.** Le procédé de la revendication 5, dans lequel ladite agrégation est effectuée par identification de documents semblables en fonction du cosinus de l'angle entre les vecteurs du document.

**8.** Le procédé de la revendication 5, comprenant en outre l'étape d'étiquetage automatique des agrégats.

**9.** Le procédé de la revendication 8, dans lequel ledit étiquetage comprend la sélection de mots représentatifs en fonction de la proximité de leurs vecteurs avec les vecteurs du document dans un agrégat.

**10.** Une interface utilisateur graphique configurée pour afficher des fichiers appartenant à un système de fichiers dans un système de fichiers virtuels avec une hiérarchie sémantique de plusieurs niveaux d'agrégats qui est dérivée des similarités sémantiques desdits fichiers selon le procédé de l'une des revendications 1 à 9.

**11.** L'interface utilisateur graphique de la revendication 10, dans laquelle l'agrégation des fichiers est initiée par une sélection utilisateur.

**12.** L'interface utilisateur graphique de la revendication 11, dans laquelle l'agrégation des fichiers est initiée à la création d'un nouveau fichier dans le système de fichiers.

**13.** L'interface utilisateur graphique de la revendication 11, dans laquelle des fichiers de texte sont agrégés en utilisant un modèle linguistique et des fichiers qui ne sont pas de texte sont agrégés en utilisant des techniques à base de règles.

**14.** L'interface utilisateur graphique de la revendication 14, dans laquelle ledit modèle linguistique comprend le paradigme LSA (Analyse Sémantique Latente).

**15.** Support lisible par ordinateur dans lequel est mémorisé du code exécutable par ordinateur pour :

l'analyse de fichiers d'un système de fichiers pour déterminer des similarités de données relatives à leur contenu ;
l'agrégation des fichiers en agrégats dans ledit espace en fonction de leur similarité sémantique, comprenant :

l'identification d'agrégats comme candidats pour une fusion ;
pour deux agrégats candidats quelconques, le calcul de l'augmentation de la variance d'agrégat d'un agrégat plus grand qui serait obtenue si les deux agrégats candidats plus petits étaient fusionnés au-dessus et au-delà de la variance moyenne des deux agrégats candidats plus petits, la variance d'agrégat étant la variance suivant une dimension des vecteurs des fichiers au sein d'un agrégat ;
l'obtention de valeurs de seuil multiples qui représentent des niveaux de granularité prédéterminés ;
la fusion des candidats pour lesquels l'augmentation calculée est inférieure à un premier seuil pour établir le plus bas niveau d'agrégat et l'établissement d'autres niveaux par fusion d'agrégats provenant de niveaux inférieurs en fonction d'une comparaison des augmentations calculées de la variance d'agrégat et des valeurs de seuil respectives des valeurs de seuil multiples pour former plusieurs niveaux d'agrégats.

**16.** Le support lisible par ordinateur de la revendication 15, dans lequel lesdits fichiers sont des documents de texte, et les similarités sont fonction du contenu textuel des fichiers.

**17.** Le support lisible par ordinateur de la revendication 16, dans lequel lesdites similarités sont déterminées en fonction d'un modèle linguistique, et des fichiers sont agrégés conformément audit modèle.

**18.** Le support lisible par ordinateur de la revendication 17, dans lequel ledit modèle linguistique comprend le paradigme LSA (Analyse Sémantique Latente).

**19.** Le support lisible par ordinateur de la revendication 17, dans lequel ledit code exécutable par ordinateur exécute les étapes de construction d'une matrice qui associe chaque mot des documents à un vecteur et associe chaque document à un vecteur.

**20.** Le support lisible par ordinateur de la revendication 19, dans lequel ledit code exécutable par ordinateur exécute en outre une étape de décomposition de ladite matrice pour définir les mots et les documents en tant que vecteurs dans un espace vectoriel continu.

**21.** Le support lisible par ordinateur de la revendication 20, dans lequel ledit code exécutable par ordinateur exécute l'agrégation par identification de documents en fonction du cosinus de l'angle entre les vecteurs du document.

**22.** Le support lisible par ordinateur de la revendication 19, dans lequel ledit code exécutable par ordinateur effectue une étape d'étiquetage automatique des agrégats.

**23.** Le support lisible par ordinateur de la revendication 22, dans lequel ledit étiquetage comprend la sélection de mots représentatifs en fonction de la proximité de leurs vecteurs avec les vecteurs du document dans un agrégat.

**24.** Le support lisible par ordinateur de la revendication 23, dans lequel le code exécutable par ordinateur exécute les étapes suivantes :

l'agrégation de fichiers de texte dans le système de fichiers en utilisant des similarités sémantiques ;
l'agrégation de fichiers qui ne sont pas de texte dans le système de fichiers en utilisant des techniques à base de règles ;
l'étiquetage des agrégats résultants ;
la dérivation des fichiers en un format hiérarchique en fonction des agrégats et étiquettes résultants ; et
la mise à disposition de l'utilisateur d'une option d'affichage des fichiers dans le format hiérarchique en fonction des agrégats et étiquettes résultants.

**25.** Un système informatique, comprenant :

un système de fichiers mémorisant des fichiers ;
un dispositif d'affichage ;
un processeur pour :

le mappage des fichiers du système de fichiers vers un espace vectoriel sémantique ;
l'agrégation des fichiers en agrégats dans ledit espace en fonction de leur similarité sémantique, comprenant :

l'identification d'agrégats comme candidats pour une fusion ;
pour deux agrégats candidats quelconques, le calcul de l'augmentation de la variance d'agrégat d'un agrégat plus grand qui serait obtenue si les deux agrégats candidats plus petits étaient fusionnés au-dessus et au-delà de la variance moyenne des deux agrégats candidats plus petits,
la variance d'agrégat étant la variance suivant une dimension des vecteurs des fichiers au sein d'un agrégat ;
l'obtention de valeurs de seuil multiples qui représentent des niveaux de granularité prédéterminés ;
la fusion des candidats pour lesquels l'augmentation calculée est inférieure à un premier seuil pour établir le plus bas niveau d'agrégat et l'établissement d'autres niveaux par fusion d'agrégats provenant de niveaux inférieurs en fonction d'une comparaison des augmentations calculées de la variance d'agrégat et des valeurs de seuil respectives des valeurs de seuil multiples pour former plusieurs niveaux d'agrégats.

**26.** Le système informatique de la revendication 25, dans lequel lesdits fichiers sont des documents de texte et ledit processeur mappe lesdits fichiers en fonction d'un modèle linguistique.

**27.** Le système informatique de la revendication 26, dans lequel ledit processeur construit une matrice qui associe chaque mot des documents à un vecteur et associe chaque document à un vecteur.

**28.** Le système informatique de la revendication 27, dans lequel ledit processeur décompose en outre ladite matrice pour définir les mots et les documents en tant que vecteurs dans un espace vectoriel continu.

**29.** Le système informatique de la revendication 27, dans lequel ledit processeur agrège les fichiers par identification des documents en fonction du cosinus de l'angle entre les vecteurs du document.

## FIG. 1

EP 1 678 635 B1

# FIG. 2A

# FIG. 2B

## FIG. 3

Map all words and documents into a semantic vector space  ⌐301

↓

Use semantic similarity to cluster documents at a predefined level of granularity  ⌐303

↓

.Assign meaningful descriptors to each cluster  ⌐305

↓

Display documents in hierarchal form based on resulting clusters  ⌐307

## FIG. 4

| $W_{1,1}$ | $W_{1,2}$ | $W_{1,3}$ | | | | | | $W_{1,N}$ |
|---|---|---|---|---|---|---|---|---|
| $W_{2,1}$ | $W_{2,2}$ | $W_{2,3}$ | | | | | | $W_{2,N}$ |
| $W_{3,1}$ | $W_{3,2}$ | $W_{3,3}$ | | | | | | $W_{3,N}$ |
| | | | | | | | | |
| | | | | | | | | |
| | | | | | | | | |
| | | | | | | | | |
| | | | | | | | | |
| | | | | | | | | |
| | | | | | | | | |
| | | | | | | | | |
| $W_{M,1}$ | $W_{M,2}$ | $W_{M,3}$ | | | | | | $W_{M,N}$ |

Words $w_i$

Documents $d_j$

# FIG. 5

$$W$$
documents

$d_1 \longleftrightarrow d_N$

$w_1$

words

$w_M$

(MxN)

$=$

$U \quad \cdot \; S$

$u_1$

word vectors

$u_M$

(MxR)

0

0

(RxR)

$V^T$
document vectors

$v_1 \longleftrightarrow v_N$

(RxN)

EP 1 678 635 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1170674 A

**Non-patent literature cited in the description**

- **J. R. BELLEGARDA.** Exploiting Latent Semantic Information in Statistical Language Modeling. *Proc. IEEE,* August 2000, vol. 88 (8), 1279-1296